# EUROPEAN PATENT APPLICATION

(11) **EP 1 676 625 A1**
(43) Date of publication of application: **05.07.2006**
(21) Application number: 05028602.0
(22) Date of filing: 28.12.2005
(51) Int. Cl.: B01D 53/86, B01J 23/56, B01J 23/66

(54) **Method and catalyst for the oxidative decomposition of formaldehyde gas**

(30) Priority: 28.12.2004 CN 200410102837; 14.10.2005 JP 2005299872
(71) Applicant: MITSUBISHI DENKI KABUSHIKI KAISHA, Chiyoda-ku Tokyo 100-8310 (JP); Research Center for Eco-Environmental Sciences, Chinese Academy of Sciences, Haidian District Beijing 100085 (CN)
(72) Inventor: He, Hong, Haidian District Beijing 100085 (CN); Zhang, Changbin, Haidian District Beijing 100085 (CN); Tanaka, Ken-ichi, Haidian District Beijing 100085 (CN); Shi, Xiaoyan, Haidian District Beijing 100085 (CN)
(74) Representative: Popp, Eugen

(57) **Abstract**

A catalyst for completely oxidizing a formaldehyde gas at a low concentration in a normal temperature circumstance by a simple and convenient production process includes a noble metal composition supported on a metal oxide in which the metal oxide composition includes at least one member selected from the group of metal oxides comprising cerium dioxide, zirconium dioxide, titanium dioxide, dialuminum trioxide, dilanthanum trioxide, magnesium oxide, zinc oxide, calcium oxide and copper oxide, and the noble metal composition comprises at least one member selected from the group of noble metals consisting of platinum, gold, rhodium, palladium, and silver.

## Description

### BACKGROUND OF THE INVENTION

### 1. Field of the Invention

The present invention has been accomplished for oxidation of a formaldehyde gas in a normal temperature circumstance, in which a formaldehyde gas can be converted into carbon dioxide and water under the normal temperature circumstance. The catalyst of the invention has an extremely high formaldehyde oxidizing activity in a predetermined period, and the conversion ratio of formaldehyde by the catalyst according to the invention reaches 100%.

### 2. Description of the Related Art

Formaldehyde is the most serious contaminant among contaminants used in furnitures and interior goods. Many interior materials including, for example, paints, wall paper, plastic floor materials, synthetic fibrous carpets, doors and windows contain formaldehyde, and they possibly release formaldehyde in the room. In particular, synthetic boards frequently use adhesives such as phenol resins, which may possibly release formaldehyde, and it has been said that the release of formaldehyde in the room from such adhesives continues for several years. Inhalation of formaldehyde little by little for a long period of time may possibly cause chronic respiratory disorders, bring about nose cancer, throat cancer, colon cancer, cerebral tumor, irregular menstruation, gene mutation of cell nuclei, cross-linkage in DNA single chain and protein cross-linkage, as well suppress recovery from DNA damages, and may possibly induce pregnancy syndrome, newborn baby chromosome abnormality, leukemia, youngsters' debilitating of memory loss, or intellectual enfeeblement. In particular, children and expectant mothers are most liable to undergo the effect of formaldehyde, and they suffer from greater health hazard of formaldehyde. Formaldehyde is a highly toxic substance, and is listed next to the top in the toxic chemical list in Japan. Formaldehyde is designated as the cancer-causing substance and the teratogenic substance by World Health Organization (WHO), as well as it has been said to be a source for mutation reaction, and a latent strong mutation induction substance. Recently, the pollution problem derived from interiors has drawn the public concern due to propagation of institutions concerned and diffusion of scientific knowledge, and researchers of various countries have vigorously made studies for dissolving the contamination in rooms.

At present, various air cleaners have been developed and the air cleaners are adapted to adsorb contaminants such as formaldehyde by mainly utilizing a high adsorptivity of activated carbon. As adsorbents, porous carbon materials such as honeycomb-activated carbon, spherical activated carbon, activated carbon fiber and new-type activated carbon, as well as molecular sieve, zeolite, porous clay or mineral, activated alumina and silica gel, etc. have been used frequently. As described above, while the air cleaner is relatively simple, the adsorbents have to be replaced periodically. Existent catalytic decomposing methods of decomposing formaldehyde into odorless harmless substances by the catalyst technique requires a predetermined temperature (generally 200°C or hither), the conversion rate of formaldehyde at a normal temperature remains 88% at the highest and the available cost is high (for example, in JP-A-2001-187343 (Table 2)). While a plasma catalyst technique can decompose a deleterious gas under normal temperature and normal pressure, this yields secondary products such as carbon monoxide, ozone and nitrogen oxides and, in addition, requires expensive plasma generation apparatus. While techniques for decomposing formaldehyde by utilizing photocatalysts at a nanometer order have been studied at present vigorously, such catalysts use TiO₂ powder or film at nanometer order mainly as the photocatalysts and the production process for the starting material requires complicated and highly skilled technique, as well as, a special exciting light source is necessary for exciting the photocatalyst at nanometer order (for example, in J. Mater. Chem. 2001, 11, 1694-1703 and Chemistry Letters, 1994, 723-726). Under the normal temperature circumstance, formaldehyde at a low concentration can not be directly oxidized into harmless water and carbon dioxide by using light.

### SUMMARY OF THE INVENTION

The present invention has been achieved in view of the foregoing subjects and provides a catalyst at high selectivity for oxidizing formaldehyde at a low concentration in a normal temperature circumstance. The catalyst uses an easily available metal oxide and an extremely small amount of noble metal as the starting material and the production process is simple. The present invention has been accomplished as a result of extensive studies based on the result of studies made so far. The catalyst provided according to the invention can completely oxidize formaldehyde and convert the same into carbon dioxide and water in a normal temperature circumstance and can keep the conversion ratio at 100% for a considerably long period of time. The invention requires no complicate relevant apparatus or external circumstance.

In the catalyst according to the invention, from 0.1 to 5% of a noble metal is supported on a metal oxide as a support. The metal oxide is an oxide or a mixture of oxides selected from cerium dioxide, zirconium dioxide, titanium dioxide, dialuminum trioxide, dilanthanum trioxide, magnesium oxide, zinc oxide, calcium oxide and copper oxide, and the noble metal composition includes one or a plurality kinds of members selected from platinum, gold, rhodium, palladium, and silver.

Further, the invention provides a method in which the catalyst described above is used in an atmosphere at a water addition amount of 0.02% or more.

The invention can completely oxidize formaldehyde and convert the same into carbon dioxide and water in a normal temperature circumstance and can keep the conversion ratio to 100% for a considerably long period of time. The invention requires no complicate relevant apparatus or external circumstance.

### DETAILED DESCRIPTION OF THE INVENTION

In the catalyst according to the invention, from 0.1 to 5% of noble metal is supported on a metal oxide as a support. The metal oxide is an oxide or a mixture of oxides selected from cerium dioxide, zirconium dioxide, titanium dioxide, dialuminum trioxide, dilanthanum trioxide, magnesium oxide, zinc oxide, calcium oxide and copper oxide, and the noble metal composition includes one or a plurality kinds of members selected fromplatinum, gold, rhodium, palladium, and silver.

The metal oxide may be as oxide or a mixture of oxides selected from dialuminum trioxide, nickel oxide, manganese dioxide, silicon dioxide, and diiron trioxide.

In the catalyst, the noble metal composition is supported on a metal oxide by means of an immersion method, a precipitation method or, a sol-gel method by using an aqueous solution of each of soluble compound. For example, in a case ofusingtheprecipitationmethod, apredeterminedmetaloxide is immersed into an aqueous solution of each of the soluble compounds of the noble metal or other metal for 1 to 24 hours and dried at 80 to 120°C, then the temperature is elevated stepwise from 100°C to 600°C in air, a nitrogen gas, a hydrogen gas or in vacuum. The grain size of the noble metal composition and other metal composition can be controlled by controlling factors such as temperature, time and atmosphere. According to the invention, a noble metal or a composition of plurality kinds of noble metals can be supported on the metal oxide irrespective of the sequence, and other noble metal composition can be supported by the same method. According to the invention, the catalyst may also be constituted by supporting the noble metal composition to different metal oxides respectively and then mixing them.

The catalyst can be formed optionally into various structures. For example, it can be supported on the wall surface of a honeycomb ceramic or metal screen structure, or an open-cell foam body may also be used as the structural support for the catalyst. Further, the catalyst may also be formed into a spherical or plate shape.

In the invention, the production process is simple, and the operation is easy. The invention has following advantages, when comparing prior arts.
(1) The constitutional materials of the catalyst of the invention are easily available owing to the reasonable price, and formaldehyde can be oxidized under normal circumstance with simple conditions upon use.
(2) The catalyst of the invention can convert formaldehyde into nontoxic carbon dioxide and water under normal temperature circumstance.
(3) The catalyst of the invention has formaldehyde conversion ratio reaching 100% in the effective period.
(4) The catalyst of the invention is used only in a small amount, does not require electricity or heat source, and thereby energy can be saved.

The invention will further be explained specifically by way of comparative examples and examples. However, they do not restrict the scope of the invention.

### [Examples]

### Comparative Example 1

Predetermined amount of deionized water was added to 10 g of dialuminum trioxide powder, a solution containing 1% of Au (gold) was added while stirring, after stirring 1 hour, dried at 70°C by a rotation evaporation method, and then baked at 600°C for 5 hours to obtain a desired catalyst. The catalyst was filtered through 40 to 60 mesh filter.

### Comparative Example 2

0.066 g of the catalyst after filtration with filter, obtained in Comparative Example 1 was used for reaction in a tubular fixed bed reactor. The experiment conditions were as described below.

A reactant gas included 20% by volume of an oxygen gas and 80% by volume of a nitrogen gas, and a formaldehyde gas was generated by a formaldehyde gas generator, and blown by the a nitrogen gas into a reaction system while controlling the concentration of the formaldehyde to 0.05% and the gas hourly space velocity (GHSV) to 50,000/hrs. the conversion ratio of formaldehyde in a normal temperature circumstance was 0.

### Example 1

A predetermined amount of deionized water was added to 10 g of titanium dioxide powder, a solution containing 1% of Pt (platinum) based on the weight of titanium dioxide was added while stirring, after stirring for 1 hour, dried at 70°C by a rotary evaporation and then baked at 600°C for 5 hours to obtain a desired catalyst. The catalyst was filtered through 40 to 60 mesh filter.

### Example 2

0.066 g of the catalyst after filtration with filter, obtained in Example 1 was used for reaction in a tubular fixed bed reactor. The experiment conditions were as described below.

A reactant gas included 20% by volume of an oxygen gas and 80% by volume of a nitrogen gas, and a formaldehyde gas was generated by a formaldehyde gas generator, and blown by a nitrogen gas into a reaction system while controlling the concentration of the formaldehyde to 0.05% and the gas hourly space velocity (GHSV) to 50,000/hrs. The conversion ratio of formaldehyde in a normal temperature circumstance was 100%, and no lowering of the conversion ratio was observed even after retention for 24 hours.

### Example 3

100 g of manganese nitrate was dissolved into a predetermined amount of water, controlled to pH at 12 to 13 with a solution of sodium hydroxide while stirring, and a solution of sodium hypochlorite was added moderately such that the molar % ratio between manganese nitrate and sodium hypochlorite in the solution was 2 to 3 and left for one night. After filtration and precipitation, it was washed with deionized water till chlorine ions were no more detected from the filtrates by detection of chlorine ions using a silver nitrate solution. Precipitates were heated and dried at 70°C. The precipitates after drying were immersed in a solution containing 5% by weight of Pt based on the weight of precipitates and, after rotary evaporation, heated and dried at 70°C. The catalyst after heating and drying was filtered through a 40 to 60 mesh filter.

The thus obtained 0.066 g of catalyst in which silver was supported on manganese dioxide was used for reaction in a tubular fixed bed reactor. The experiment conditions are as described below.

A reactant gas included 20% by volume of an oxygen gas and 80% by volume of a nitrogen gas, and a formaldehyde gas was generated by a formaldehyde gas generator, and blown by a nitrogen gas into a reaction system while controlling the concentration of formaldehyde to 0.05% and the gas hourly space velocity (GHSV) to 50, 000/hrs. The conversion ratio of formaldehyde in a normal temperature circumstance was 100% and the conversion ratio was maintained for 48 hours. While the conversion ratio was lowered subsequently to about 70%, no further lowering of the conversion ratio was observed even after retention for 60 hours.

### Example 4

100 g of nickel nitrate was dissolved into a predetermined amount of water, controlled to pH at 12 to 13 with a solution of sodium hydroxide while stirring, and a solution of sodium hypochlorite was added moderately such that the molar % ratio between manganese nitrate and sodium hypochlorite solution was 2 to 3 and left for one night. After filtration and precipitation, it was washed with deionized water till chlorine ions were no more detected from the filtrates by detection of chlorine ions using a silver nitrate solution. Precipitates were heated and dried at 70°C. The precipitates after drying were immersed in a solution containing 1% by weight of Au based on the weight of precipitates and, after rotary evaporation, heated and dried at 70°C. The catalyst after heating and drying was filtered through a 40 to 60 mesh filter.

The thus obtained 0.066 g of catalyst in which silver was supported on nickel dioxide was used for reaction in a tubular fixed bed reactor. The experiment conditions are as described below.

A reactant gas included 20% by volume of an oxygen gas and 80% by volume of a nitrogen gas, and a formaldehyde gas was generated by a formaldehyde gas generator, and blown by a nitrogen gas into a reaction system while controlling the concentration of formaldehyde to 0.05% and the gas hourly space velocity (GHSV) to 50,000/hrs. The conversion ratio of formaldehyde in a normal temperature circumstance was 100% and the conversion ratio was maintained for 48 hours. While the conversion ratio was lowered subsequently to about 80%, no further lowering of the conversion ratio was observed even after retention for 48 hours.

### Example 5

100 g of nickel nitrate was dissolved into a predetermined amount of water, controlled to pH at 12 to 13 with a solution of sodium hydroxide while stirring, and a solution of sodium hypochlorite was added moderately such that the molar % ratio between the nickel nitrate and the sodium hypochlorite solution was 2 to 3 and left for one night. After filtration and precipitation, it was washed with deionized water till chlorine ions were no more detected from the filtrates by detection of chlorine ions using a silver nitrate solution. Precipitates were heated and dried at 70°C. The precipitates after drying were immersed in a solution containing 0.5% by weight of Au-0.5% Pd based on the weight of precipitates and, after rotary evaporation, heated and dried at 70°C. The catalyst after heating and drying was filtered through a 40 to 60 mesh filter.

The thus obtained 0.066 g of catalyst in which silver was supported on nickel oxide was used for reaction in a tubular fixed bed reactor. The experiment conditions are as described below.

A reactant gas included 20% by volume of an oxygen gas and 80% by volume of a nitrogen gas, and a formaldehyde gas was generated by a formaldehyde gas generator, and blown by a nitrogen gas into a reaction system while controlling the concentration of formaldehyde to 0.05% and the gas hourly space velocity (GHSV) to 50,000/hrs. The conversion ratio of formaldehyde in a normal temperature circumstance was 100% and the conversion ratio was maintained for 48 hours. While the conversion ratio was lowered subsequently to about 70%, no further lowering of the conversion ratio was observed even after retention for 78 hours.

### Example 6

A predetermined amount of water was added to 50 g of a titanium dioxide powder and, while stirring, a solution containing 1.0 % by weight of Pt was added and stirred for one hour to obtain a mixed solution of titanium dioxide and Pt. Then, the obtained mixed solution was dried at 70°C by using a rotary evaporator and then baked at 400°C for 5 hours. The powder after baking was ground in a mortar to obtain a powder having a grain size of about 5 µm, and then purified water was added to forma slurry for immersion of the honeycomb.

Then, the honeycomb made from cordierite was immersed in the slurry to coat the entire of the honeycomb with the powder, dried at 100°C for 5 hours. The treatment was repeated five times to obtain the coating amount.

Then, baking was conducted at 300°C for 5 hours.

The thus obtained honeycomb was used for reacted in a tubular fixed bed reactor. The experimental conditions were as described below.

A reactant included 20% by volume of an oxygen gas and 80% by volume of a nitrogen gas, and a formaldehyde gas was generated by a formaldehyde gas generator, after adding 1.7% of water content by bubbling in water, the nitrogen gas was blown into a reaction system while controlling the formaldehyde concentration to 0.05% and the gas hourly space velocity (GHSV) was determined to 50,000/hrs. The conversion ratio of the formaldehyde under a normal temperature circumstance was 100%, and the conversion ratio was maintained for 48 hours. While the conversion ratio was lowered slight, the conversion ratio was maintained at 98% even after retention for 100 hours, and no further lowering of the conversion ratio was observed even after retention for 60 hours.

### Example 7

A predetermined amount of water was added to 10 g of a titanium dioxide powder and, while stirring, a solution containing 5% by weight of Pt based on the weight of the titanium dioxide powder was added and stirred for one hour to obtain a mixed solution of titanium dioxide and Pt. Then, the obtained mixed solution was dried at 80°C by using a rotary evaporator and then baked at 400°C for 5 hours.

The thus obtained 0.5 g of the catalyst in which Pt was supported on titanium dioxide was used for reaction in a tubular fixed bed reactor. The experiment conditions are as described below.

A reactant gas included 20% by volume of an oxygen gas and 80% by volume of a nitrogen gas, and a formaldehyde gas was generated by a formaldehyde gas generator. After mixing the gases, water content was added by bubbling in water and the gas was blown into a reaction system while controlling the formaldehyde concentration to 0.01% and the gas hourly space velocity (GHSV) to 50,000/hrs. The addition amount of water content was changed starting from 0.01% in a case with no bubbling (corresponding to the residual water content in oxygen and nitrogen gases supplied). As a result, the conversion ratio of the formaldehyde under a normal temperature circumstance after 24 hours was 100% irrespective of the presence or absence of added water content. After 100 hours, the formaldehyde conversion ratio in a case with no addition of water content (containing residual water content of 0.01% in a case of no addition) was 85%, the formaldehyde conversion ratio of the system with addition of 0.02% of water content was 92%, the formaldehyde conversion ratio of the system with addition of 0.5% of water content was 95%, the formaldehyde conversion ratio of the system with addition of 0.7% of water content was 98%, and the formaldehyde conversion ratio with addition of 3.5% of water content was 97%. After 200 hrs, while the formaldehyde conversion ratio was maintained as it was in a cases of adding water by 0.02% or more, the formaldehyde conversion ratio was lowered to 70% in a case of with no addition.

## Claims

1. A catalyst for complete oxidative decomposition of a formaldehyde gas at a normal temperature, the catalyst comprising:
a small amount of a noble metal supported on a metal oxide.

2. The catalyst according to claim 1, wherein
the noble metal is one or a plurality of members selected from platinum, gold, rhodium, palladium and silver.

3. The catalyst according to claim 1, wherein
the noble metal is mixed, dried and supported on the metal oxide by an immersion method, precipitation method or sol-gel method using an aqueous solution of a soluble compound of each of them.

4. The catalyst according to claim 1, wherein
the amount of the noble metal supported on a metal oxide support is from 0.1 to 5% by weight based on the metal element.

5. The catalyst according to claim 1, wherein
the metal oxide support is an oxide or a mixture of a plurality of oxides selected from cerium dioxide, zirconium dioxide, titanium dioxide, dialuminumtrioxide, dilanthanum trioxide, magnesium oxide, zinc oxide, calcium oxide and, copper oxide.

6. The catalyst according to claim 1, wherein
the metal oxide support is an oxide or a mixture of a plurality of oxides selected from nickel oxide, dialuminum trioxide, manganese dioxide, silicon dioxide and diiron trioxide.

7. A method of using a catalyst for complete oxidative decomposition of a formaldehyde gas at a normal temperature, the catalyst including a small amount of a noble metal supported on a metal oxide, the method comprising:
using the catalyst in an atmosphere at a water addition amount of 0.02% or more

8. The method of using a catalyst according to claim 7, wherein
the noble metal is one or a plurality of members selected from platinum, gold, rhodium, palladium and silver.

9. The method of using a catalyst according to claim 7, wherein
the noble metal is mixed, dried and supported on the metal oxide by an immersion method, precipitation method or sol-gel method using an aqueous solution of a soluble compound of each of them.

10. The method of using a catalyst according to claim 7 , wherein
the amount of the noble metal supported on a metal oxide support is from 0.1 to 5% by weight based on the metal element.

11. The method of using a catalyst according to claim 7 , wherein
the metal oxide support is an oxide or a mixture of a plurality of oxides selected from cerium dioxide, zirconium dioxide, titanium dioxide, dialuminumtrioxide, dilanthanum trioxide, magnesium oxide, zinc oxide, calcium oxide and, copper oxide.

12. The method of using a catalyst according to claim 7 , wherein
the metal oxide support is an oxide or a mixture of a plurality of oxides selected from nickel oxide, dialuminum trioxide, manganese dioxide, silicon dioxide and diiron trioxide.
